# EUROPEAN PATENT APPLICATION

(11) **EP 1 775 100 A1**
(43) Date of publication of application: **18.04.2007**
(21) Application number: 05256340.0
(22) Date of filing: 12.10.2005
(51) Int. Cl.: B29C 55/14, B29C 55/06, B01D 71/36

(54) **Manufacturing method of uniaxially drawn porous polytetrafluoroethylene membrane**

(71) Applicant: Singtex Industrial Co., Ltd., Taipei 244 (TW)
(72) Inventor: Chen, Guo-Cin, Changhua City Changhua Hsien, 50062 (TW)
(74) Representative: Brown, Michael Stanley

(57) **Abstract**

A manufacturing method of uniaxially drawn porous polytetrafluoroethylene membrane is to process a semifinished product of polytetrafluoroethylene membrane after a corona treatment with an extension procedure and a shaping procedure to obtain finished porous membrane having uniform thickness, pore distribution, pore size and pore-space rate.
By having the procedures and controlling the operational conditions in the manufacturing method, the finished porous membrane has excellent ventilation, moisture-permeability, and water-repellence efficiency. Moreover, the manufacturing method has simple produces without using accessory devices to reduce cost and to increase throughput as well. The finished membrane enables to apply on fabric, non-fabric, cloth or the similar for industrial applications.

## Description

### BACKGROUND OF THE INVENTION

### 1. Field of the Invention

The present invention relates to a manufacturing method of uniaxially drawn porous polytetrafluoroethylene membrane, and more particularly to a simple and quick manufacturing method that obtains a rolled polytetrafluoroethylene membrane treated with a corona treatment and then further subjects the membrane to an extension procedure and a shaping procedure to obtain a micro-porous polytetrafluoroethylene membrane which is uniform in pore distribution, pore diameter, thickness and pore-space rate and has excellent ventilation, moisture-permeability, and water-repellence efficiency.

### 2. Description of Related Art

Teflon^{®} is a resin specifically named in polytetrafluoroethylene and is manufactured by polymerizing tetrafluoroethylene (C₂F₄) monomers together. Because Teflon^{®} is composed of carbon atoms and fluorine atoms without hydrogen, Teflon^{®} does not react with oxygen so that it has thermal-resistance, cold-resistance, corrosion-resistance, low friction coefficient and self-lubricating efficiency etc. Besides, Teflon^{®} does not fuse with other materials and is not easily contaminated so that Teflon^{®} is commonly used in relative industries.

Because Teflon^{®} has the foregoing advantages, manufacturers make polytetrafluoroethylene into sheets or membranes with pores to attach to fabric or non-fabric to serve as filter. Applications of the polytetrafluoroethylene membrane are disclosed in U.S. patents of No.5,234,739, No.6,080,472, No.7,50,242 and in Taiwan patents of Pub. No.538142 and Pub. No.592783.

According to above description, processed polytetrafluoroethylene is widely used in industrial and living appliances. Differences according to different applications are disclosed and protected by U.S. patents of No.6,702, 971, No.6,852,223, No.5,098,625, No.6, 228,477, No.6,410,084, No.6,676,993, No.6,854,603 and No.4,096,227.

By reading the foregoing patents, characteristics of these patents focus on porosity of the polytetrafluoroethylene sheet or membrane. However, uniformity of the pore distribution and the pore size still can not be controlled within standard ranges.

Moreover, if manufacturing procedures are modified to overcome the foregoing drawbacks, procedures become complicated and accessory devices are needed so that cost tremendously increases.

Additionally, the manufacturing procedures disclosed in the foregoing patents easily cause defect products because of complication when one of the manufacturing procedures goes wrong. Therefore, product quality can not be controlled ideally and manufacturing efficiency is correspondingly reduced.

### SUMMARY OF THE INVENTION

According to above description, a manufacturing method of uniaxially drawn porous polytetrafluoroethylene membrane provided in the present invention integrates operating procedures and devices to overcome and reduce the drawbacks in the conventional manufacturing procedures.

A main objective of the present invention is to provide a manufacturing method of uniaxially drawn porous polytetrafluoroethylene membrane, the method is simplified and improved to promote quality control, increase output, and reduce defect outputs and manufacturing cost.

Another main objective of the present invention is to provide a manufacturing method of uniaxially drawn porous polytetrafluoroethylene membrane, wherein a semifinished product of polytetrafluoroethylene membrane after a corona treatment is processed to obtain finished porous polytetrafluoroethylene membrane having uniform thickness, pore distribution, pore size and pore-space rate.

Still another main objective of the present invention is to provide a manufacturing method of uniaxially drawn porous polytetrafluoroethylene membrane, wherein the finished porous polytetrafluoroethylene membrane has excellent ventilation, moisture-permeability, and water-repellence.

To achieve foregoing objectives, the manufacturing method comprises:
obtaining a semifinished product made of rolled polytetrafluoroethylene membrane;
feeding the semifinished product into an extension procedure by a feeding wheel and rollers, wherein the extension procedure comprises a first drawing stage to longitudinally extend the polytetrafluoroethylene membrane, a pre-heating stage to heat the polytetrafluoroethylene membrane by a first heating device, and a second drawing stage to transversally extend the polytetrafluoroethylene membrane;
heating the polytetrafluoroethylene membrane by a second heating device, which is defined as a shaping stage; and
reeling the polytetrafluoroethylene membrane on a reeling wheel to obtain a finished product of the uniaxial drawn porous polytetrafluoroethylene membrane.

By having the procedures and controlling operational conditions in the procedures, the porous polytetrafluoroethylene membrane is achieved

Further benefits and advantages of the present invention will become apparent after a careful reading of the detailed description with appropriate reference to the accompanying drawings.

### BRIEF DESCRIPTION OF THE DRAWINGS

Fig. 1 is a flow block diagram of a manufacturing method of uniaxially drawn porous polytetrafluoroethylene membrane in accordance with the present invention;
Fig. 2 is a schematic operation view of equipment used in the manufacturing method of uniaxially drawn porous polytetrafluoroethylene membrane in Fig. 1;
Fig. 3 is a microstructure photo of a semifinished product of the polytetrafluoroethylene membrane;
Fig. 4 is a microstructure photo of a finished product of the polytetrafluoroethylene membrane;
Fig. 5 is a fusion curve diagram of the semifinished product of the polytetrafluoroethylene membrane; and
Fig. 6 is a fusion curve diagram of the finished product of the polytetrafluoroethylene membrane.

### DETAILED DESCRIPTION OF THE PREFERRED EMBODIMENT

Characteristics of dual-directionally drawn Teflon^{®} membrane are analyzed in the following. Teflon^{®} is made of polytetrafluoroethylene in super macromolecule and is a dual-directionally drawn membrane by specific processes. When the Teflon^{®} membrane is observed under high-magnification electron microscope, the membrane contains obvious nodes and fibrials variant according to different temperatures and different extension rates. At high extension rates, the fibrials do not stretch anymore but the nodes further break into smaller nodes connected with thinner fibrials around. Therefore, the nodes and the fibrials gradually become scales of nanometer or micrometer after drawing to make the membrane applicable in more industrial fields. A semifinished product used in the present invention is made of the polytetrafluoroethylene membrane that has rough fibrials and nodes not corresponding to nanometer or micrometer. By using the present invention, the polytetrafluoroethylene membrane is uniaxially drawn twice in different directions, especially longitude and transervse, to form fine fibrials, nodes and ventilative microspores.

In the manufacturing method of the present invention, control of the drawing process and operational temperature is the important factor to simplify the method, reduce cost and increase throughput. Moreover, the polytetrafluoroethylene membrane is improved in having uniformity of thickness, pore distribution, pore diameter, and pore-space rate and has excellent ventilation, moisture-permeability and water-repellence capabilities.

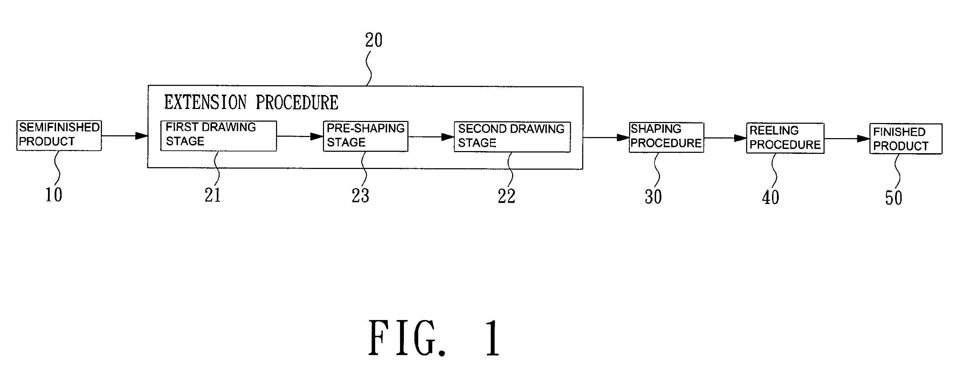

With reference to Fig. 1 that is a flow block diagram of the manufacturing method of uniaxially drawn porous polytetrafluoroethylene membrane in the present invention, a semifinshed product 10 is subjected to an extension procedure 20, a shaping procedure 30 and a reeling procedure 40 to obtain the finished membrane 50.

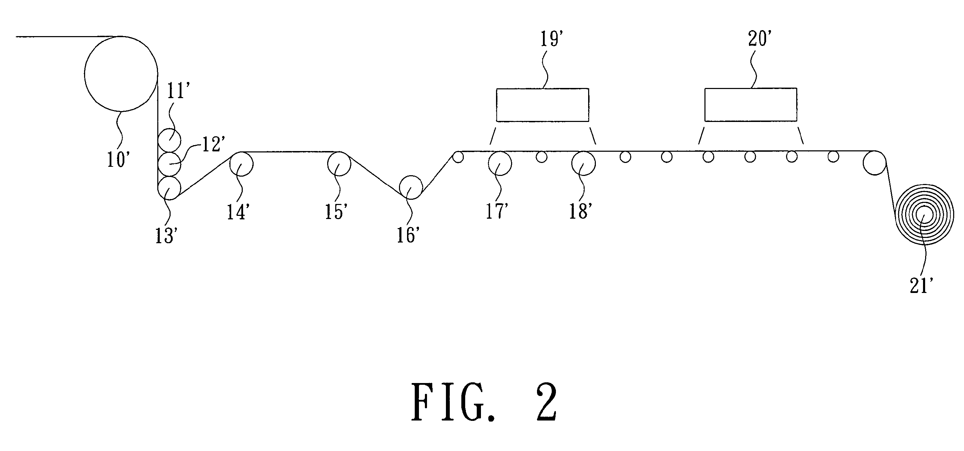

With reference to Figs. 1 and 2, the semifinished product 10 used in the manufacturing method of the present invention is a rolled polytetrafluoroethylene membrane in continuous sheet state to wind on a feeding wheel 10'. Then, the semifinished product 10 is drawn to the extension procedure 20 by rollers 11', 12' 13. The extension procedure 20 contains a first drawing stage 21, a pre-shaping stage 23 and a second drawing stage 22. When the semifinished product 10 runs from a first drawing wheel 14', a roller 15' and to a second drawing wheel 16', this section is defined as the first drawing stage 21. In the first drawing stage 21, speed differences between the rollers 11', 12', 13' and the first and second drawing wheels 14' 16 are adjusted to control the feeding of the polytetrafluoroethylene membrane and to longitudinally extend the polytetrafluoroethylene membrane. An extension ratio of the membrane in the first drawing stage 21 to the one at the beginning is 1.5 times. When the semifinished product 10 runs from a third drawing wheel 17' to a fourth drawing wheel 18', this section is defined as the second drawing stage 22. In the second drawing stage 22, the polytetrafluoroethylene membrane is transversally extended and heated by a first heating device 19' before or during the second drawing stage 22 to carry out the pre-shaping stage 23. An extension ratio of the membrane in the second drawing stage 22 to the one in the first drawing stage 21 is 4 to 8 times. Because the extension ratio is large, the heating in the pre-shaping stage 23 before or during the second drawing stage 22 is necessary to achieve the extension ratio and to avoid breakage, uneven thickness, inhomogeneity in pore diameters and pore-space rate during extension. Therefore, the first drawing stage 21, the second drawing stage 23 and the pre-shaping stage 23 are included in the extension procedure 20, wherein the extension ratio reaches 6 to 12 times in total. When the membrane is treated with a second heating device 20', this section is defined as the shaping procedure 30 that processes the membrane having standard thickness, pore diameter, and pore-space rate after the extension procedure 20 and stabilizes the membrane by the second heating device 20'. Thereby, the membrane is uniform in thickness, pore diameter, and pore-space rate and stable without retraction. Lastly, the membrane is wound on a reeling wheel 21' at a proper rotating speed in the reeling procedure 40 to obtain the finished product 50.

Important operational factors in each procedure are listed in the following to illustrate the application and relationship between the devices and the corresponding procedure:

Semifinished product 10: the semifinished product is a rolled polytetrafluoroethylene membrane treated with a corona treatment and has 0.10 to 0.15 mm of thickness, 160 to 300 mm of width, 0.8 to 1.3 of g/cm³ of density, and non-porous surfaces.

Extension procedure 20: the extension procedure comprises the first drawing stage 21, the pre-shaping stage 23, and the second drawing stage 22 and has extension ratio within a range of 6 to 12 times. The first drawing stage 21 provides a longitudinal force to the membrane and the second drawing stage 22 provides a transversal force to the membrane and heats the membrane before or during the pre-shaping stage 23 as well. The second drawing stage 22 has the extension ratio larger than the one in the first drawing stage 21. In the pre-shaping stage 23, temperature is between 80 to 150 °C and heating duration is about 3 to 5 sec.

Shaping procedure 30: in the shaping procedure, temperature is set between 300 to 400 °C and the heating duration is about 10 sec.

Reeling procedure 40.

Finished product 50: the finished product 50 is the uniaxially drawn porous polytetrafluoroethylene membrane with 0.03 to 0.06 mm of thickness, 1600 mm of width, 80 to 85% of pore-space rate, over 9000 mm-H₂O of water pressure resistance tested by JIS L-1092 testing method (including 9000 mm-H₂O), 9995 to 11713 g/m² × 24 hrs of moisture-permeability measured by JIS L-1099A1, and 13045 to 15445 g/m² × 24 hrs of water vapor transmission measured by ASTM E-96.

By controlling the important procedure factors and having variations in procedures to change the semifinished product 10, the uniaxially drawn porous polytetrafluorouethylene membrane is obtained and reeled up for convenient transportation.

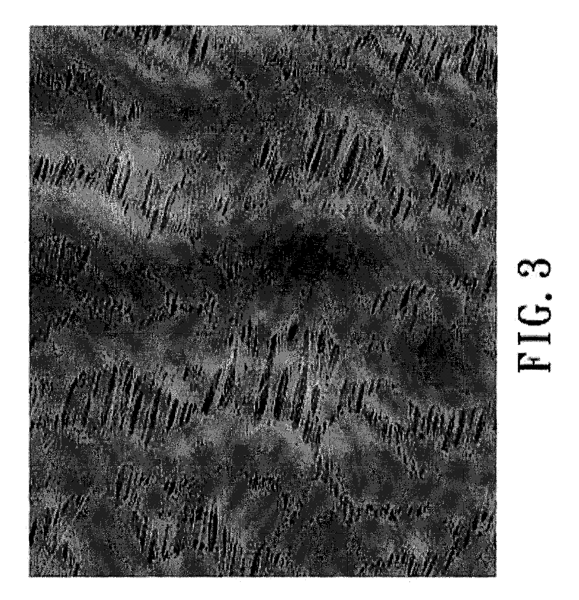

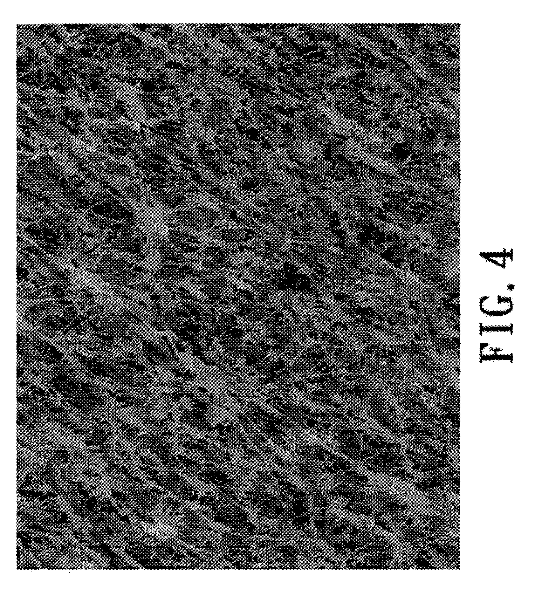

With reference to Fig. 3, the microstructure photo shows the original state of the semifinished product 10 with the fibrials and nodes. With further reference to Fig. 4, the finished product 50 of the uniaxially drawn porous polytetrafluoroethylene membrane has difference at the fibrials and nodes in comparison with the semifinished product 10, wherein pore-space rate, pore diameter and pore distribution between the fibrials and nodes and the uniformity of fibrial and node distributions are all different.

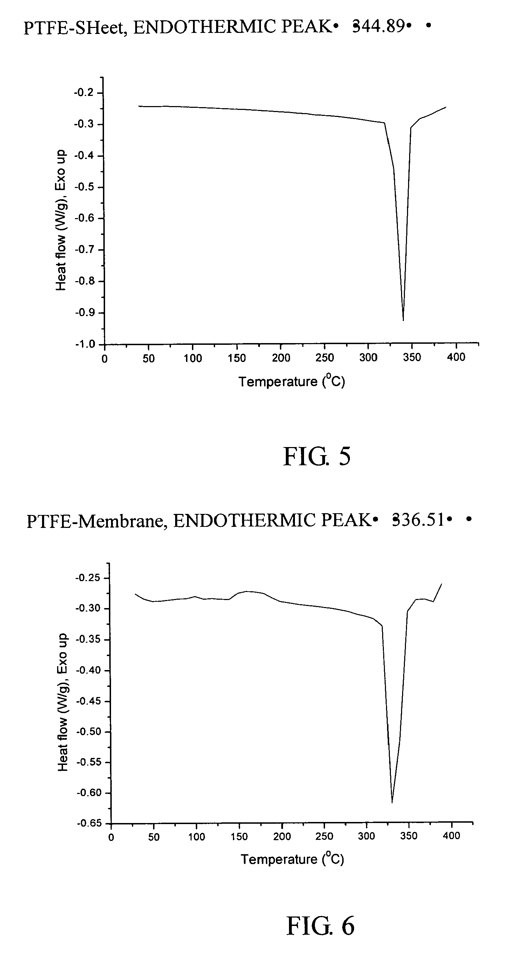

With reference to Fig.5, the semifinished product 10 of the rolled polytetrafluoroethylene membrane has a fusion curve diagram indicating that an endothermic peak at 344.89°C is obtained when the heating temperature rises from 50 to 350°C. With further reference to Fig. 6, the finished product of the polytetrafluoroethylene membrane has a fusion curve diagram indicating that an endothermic peak at 336.51°C is obtained when the heating temperature also rises from 50 to 350°C. The two endothermic peaks in Figs. 5 and 6 have small changes therebetween, that is to say, the finished product 50 obtained by processing the semifinished product 10 with the manufacturing method in this invention is stabile and has the fusion curve varied within a certain range to cause no great changes between the endothermic peaks so that the quality of the uniaxially drawn porous polytetrafluoroethylene membrane is ensured and does not vary after processing with the present manufacturing method.

With reference to Table 1 below, the finished product 50 of the was tested with JIS L-1099A1 and ASTM E-96 testing methods, wherein the polytetrafluoroethylene membrane has 9995 to 11713 g/m² × 24 hrs moisture-permeability measured by JIS L-1099A1 and 13045 to 15445 g/m² × 24 hrs of water vapor transmission measured by ASTM E-96, both are higher than normal values of moisture-permeability in the conventional membrane. Therefore, the finished product 50 is the porous polytetrafluoroethylene membrane having excellent moisture permeability.

| Item | Code | Testing methods and moisture-permeability obtained thereof* | |
|---|---|---|---|
| | | JIS-1099 A1 | ASTM E-96 |
| 1 | STB005 | 10676 | 13974 |
| 2 | STB008 | 10198 | 14697 |
| 3 | STB010 | 10012 | 14357 |
| 4 | STB013 | 9995 | 14803 |
| 5 | STB018 | 11348 | 13316 |
| 6 | STB020 | 10953 | 13045 |
| 7 | STB025 | 11713 | 15445 |

| | | | |
|---|---|---|---|
| * Unit: g/m²×24hrs | | | |

The testing methods of water pressure resistance and moisture permeability described above do not set any limitations to test the porous polytetrafluoroethylene membrane in this invention. Other testing methods that enable to detect the moisture-permeability within the range in the present invention after unit conversion are also included within the spirit as defined in the claims.

By having the procedures and controlling the important factors in the procedures, the manufacturing method of the uniaxially drawn porous polytetrafluoroethylene membrane is simplified to improve quality control and output quantity and to reduce defect products and manufacturing cost as well.

By having the procedures and controlling the important factors in the procedures, the rolled polytetrafluoroethylene membrane of the semifinished product 10 treated with the procedures in this invention become the porous membrane with even thickness, uniform pore distribution and uniform pore diameter.

By having the procedures and controlling the important factors in the procedures, the finished product of porous polytetrafluoroethylene membrane has excellent ventilation, moisture-permeability and water-repellence efficiency.

Although this invention has been described in its preferred form with a certain degree of particularity, it is understood that the present invention of the preferred form has been made only by way of example and that numerous changes in the details of construction and the combination and arrangement of parts any be resorted to without departing from the spirit and scope of the invention.

## Claims

1. A manufacturing method of uniaxially drawn porous polytetraethylene membrane, the manufacturing method comprising:
obtaining a semifinished product made of rolled polytetrafluoroethylene membrane;
feeding the semifinished product into an extension procedure by a feeding wheel and rollers, wherein the extension procedurecomprises a first drawing stage to longitudinally extend the polytetrafluoroethylene membrane, a pre-heating stage to heat the polytetrafluoroethylene membrane by a first heating device, and a second drawing stage to transversally extend the polytetrafluoroethylene membrane;
heating the polytetrafluoroethylene membrane by a second heating device, which is defined as a shaping stage; and
reeling the polytetrafluoroethylene membrane on a reeling wheel to obtain a finished product of the uniaxially drawn porous polytetrafluoroethylene membrane.

2. The manufacturing method as claimed in claim 1, wherein the extension procedure is carried out by steps comprises:
the first drawing stage defined as running the polytetrafluoroethylene membrane from a first drawing wheel to a second drawing wheel;
the second drawing stage defined as running the polytetrafluoroethylene membrane from a third drawing wheel to a fourth drawing wheel;
wherein, the pre-shaping is carried out before or during the second drawing stage.

3. The manufacturing method as claimed in claim 1, wherein the manufacturing method comprises operational conditions as the following:
the semifinished product: the rolled polytetrafluoroethylene membrane is treated with a corona treatment and has 0.10 to 0.15 mm of thickness, 160 to 300 mm of width, 0.8 to 1.3 of g/cm³ of density, and non-porous surfaces;
extension procedure: the extension procedure comprises the first drawing stage, the pre-shaping stage, and the second drawing stage and has extension ratio within a range of 6 to 12 times, wherein the first drawing stage provides a longitudinal force to the polytetrafluoroethylene membrane and the second drawing stage provides a transversal force to the membrane;
the pre-shaping stage: temperature is controlled between 80 to 150 °C and heating duration is 3 to 5 sec;
shaping procedure: temperature is between 300 to 400 °C and the heating duration is 10 sec.
reeling procedure; and
the finished product: the finished product 50 is the uniaxially drawn porous polytetrafluoroethylene membrane with 0.03 to 0.06 mm of thickness, 1600 mm of width, 80 to 85% of pore-space rate, over 9000 mm-H₂O of water pressure resistance, and 9995 to 11713 g/m² × 24 hrs of moisture-permeability.

4. The manufacturing method as claimed in claim 1 or 2, wherein the first drawing stage has an extension ratio of 1.5 times and the second drawing stage has an extension ratio of 4 to 8 times.
